# FASCICULE DE BREVET EUROPEEN

(11) **EP 1 938 023 B1**
(45) Date de publication et mention de la délivrance du brevet: **18.03.2009**
(21) Numéro de dépôt: 06794329.0
(22) Date de dépôt: 16.08.2006
(51) Int. Cl.: F25B 21/00

(54) **GENERATEUR THERMIQUE A MATERIAU MAGNETOCALORIQUE**
WÄRMEERZEUGER MIT EINEM MAGNETOKALORISCHEN MATERIAL
THERMAL GENERATOR HAVING A MAGNETOCALORIC MATERIAL

(30) Priorité: 01.09.2005 FR 0508963
(43) Date de publication de la demande: 02.07.2008
(73) Titulaire: Cooltech Applications S.A.S, 67810 Holtzheim (FR)
(72) Inventeur: DUPIN, Jean-Louis, F-68320 Muntzenheim (FR); HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2006/001948
(87) Numéro de publication internationale: WO 2007/026062

(56) Documents cités:
- EP-A- 1 463 068
- WO-A-03/050456
- WO-A-20/05095872
- FR-A- 2 864 211
- US-A- 5 249 424
- US-A1- 2004 093 877

## Description

### Domaine technique :

La présente invention concerne un générateur thermique à matériau magnétocalorique comportant au moins un support fixe portant au moins deux éléments thermiques à matériau magnétocalorique, des moyens magnétiques mobiles par rapport aux dits éléments thermiques de manière à les soumettre à une variation de champ magnétique pour faire varier leur température, et des moyens de récupération des calories et des frigories émises par lesdits éléments thermiques comportant au moins deux circuits de fluide caloporteur, un circuit dit « chaud » et un circuit dit « froid », chaque circuit étant couplé à au moins un échangeur thermique et pourvu de moyens de commutation pour mettre, dans ledit circuit, l'élément thermique correspondant.

### Technique antérieure :

Les générateurs thermiques à matériau magnétocalorique utilisent les propriétés magnétocaloriques de certains matériaux, tels que le gadolinium ou certains alliages, qui présentent la particularité de s'échauffer sous l'effet d'un champ magnétique et, de se refroidir, à une température inférieure à leur température initiale, après disparition du champ magnétique ou suite à une diminution de ce champ magnétique. Cet effet magnétocalorique se produit à proximité du point de Curie du matériau. Cette nouvelle génération de générateurs thermiques présente l'avantage d'offrir une solution très écologique car non polluante. Toutefois, pour être économiquement rentable et fournir un bon rendement énergétique, la conception de tels générateurs et de leurs moyens de récupération des calories et des frigories émises par ces matériaux est primordiale.

La publication WO-A-03/050456 donne un premier exemple dans lequel le générateur thermique à matériau magnétocalorique comporte une enceinte annulaire monobloc délimitant douze compartiments séparés par des joints et recevant chacun du gadolinium sous forme poreuse. Chaque compartiment est pourvu de quatre orifices, dont un orifice d'entrée et un orifice de sortie reliés à un circuit chaud, et un orifice d'entrée et un orifice de sortie reliés à un circuit froid. Les deux aimants permanents sont animés d'un mouvement de rotation continue de sorte qu'ils balayent les différents compartiments en les soumettant successivement à un champ magnétique différent. Les calories et les frigories émises par le gadolinium des différents compartiments sont guidées vers des échangeurs de chaleur par des circuits chaud et froid, dans lesquels circule un fluide caloporteur, et auxquels ils sont successivement raccordés par l'intermédiaire de joints tournants, dont la rotation est synchronisée sur celle des aimants. Les impératifs liés à cette rotation synchrone rendent ce dispositif techniquement difficile et coûteux à réaliser. De plus, son principe de fonctionnement rend ses perspectives d'évolution technique très limitées. Par ailleurs, sa construction est complexe et coûteuse compte tenu des différents conduits, raccords et vannes nécessaires pour réaliser les circuits chaud et froid. D'autre part, le rendement énergétique d'un tel générateur reste insuffisant, limitant considérablement ses applications. En effet, le fluide caloporteur qui circule à travers les pores du matériau magnétocalorique est le même aussi bien pour le circuit froid, que pour le circuit chaud, seul son sens de circulation est inversé, d'où une inertie thermique très pénalisante.

La publication FR-A-2 861 454 donne un second exemple dans lequel les éléments thermiques sont traversés par un canal, situé à proximité du matériau magnétocalorique, et communiquant avec le circuit de fluide caloporteur au travers d'une platine sur laquelle ils sont montés. Cette platine comporte des canaux définissant les circuits chaud et froid dans lesquels circule le fluide caloporteur et auxquels le canal des éléments thermiques est directement raccordé, sans conduit ni raccord intermédiaire. Ce type de construction a l'avantage de réduire nettement le coût de fabrication d'un tel générateur et d'offrir une grande souplesse de configurations. Toutefois, on retrouve les inconvénients liés au fluide caloporteur unique, qui circule dans les éléments thermiques aussi bien pour le circuit froid, que pour le circuit chaud. Cette solution présente par conséquent un rendement calorifique insuffisant.

### Exposé de l'invention:

La présente invention vise à pallier ces inconvénients en proposant un générateur thermique non polluant, ayant un très bon rendement énergétique, de conception simple et économique, faible consommateur d'énergie, tout en étant évolutif, flexible, modulaire et pouvant être utilisé aussi bien dans des installations industrielles de grande échelle que pour des applications domestiques.

Dans ce but, l'invention concerne un générateur thermique du genre indiqué en préambule, caractérisé en ce que chaque élément thermique comporte des passages de fluide (35) formant au moins deux circuits collecteurs distincts, un circuit collecteur dit « chaud » dans lequel circule le fluide caloporteur du circuit chaud chargé de collecter les calories émises par ledit élément thermique soumis au champ magnétique, et un circuit collecteur dit « froid » dans lequel circule le fluide caloporteur du circuit froid chargé de collecter les frigories émises par ledit élément thermique non soumis au champ magnétique, lesdits fluides caloporteurs étant mis en mouvement alternativement dans l'un ou l'autre circuit collecteur selon que ledit élément thermique est soumis ou non au champ magnétique et qu'il émet des calories ou des frigories.

Les éléments thermiques sont au moins en partie réalisés dans une matière magnétocalorique se présentant au moins sous une forme choisie dans le groupe comprenant un bloc plein, un empilage de blocs pleins ou de plaques pleines, un assemblage de particules, un bloc poreux, un empilage de blocs poreux ou de plaques poreuses, une combinaison de ces formes.

Les circuits collecteurs sont de préférence formés chacun d'une multitude de passages de fluide, répartis dans l'épaisseur des éléments thermiques pour offrir une grande surface d'échange thermique, ces passages de fluide étant de petite taille, comprise entre 0,01 mm et 5 mm et de préférence égale à 0,15 mm, apte à créer un écoulement sensiblement laminaire du fluide caloporteur au travers des éléments thermiques. Les passages de fluide des deux circuits collecteurs de chaque élément thermique peuvent avoir des orientations parallèles ou différentes et par exemple perpendiculaires. Ils sont définis au moins par une forme choisie dans le groupe comprenant des perforations, des rainures, des fentes, des interstices, une combinaison de ces formes, ces formes pouvant être obtenues par usinage, gravures chimique, ionique ou mécanique, formage, intercalaire entre blocs ou plaques, espace entre particules.

Dans la forme de réalisation préférée de l'invention, le support fixe comporte au moins une platine pourvue au moins de deux ouvertures délimitant des cavités pour y recevoir les éléments thermiques et au moins deux séries de canaux formant une partie des circuits de fluide caloporteur chaud et froid et débouchant dans chaque cavité par un orifice d'entrée et un orifice de sortie aptes à communiquer avec les passages de fluide correspondant des éléments thermiques, soit deux orifices d'entrée et deux orifices de sortie par cavité.

Les canaux peuvent être formés par des rainures réparties sur l'une ou l'autre des deux faces ou sur les deux faces de la platine, la ou les faces étant recouvertes par un flasque rapporté agencé pour obturer et étancher ces canaux.

Les éléments thermiques et les cavités ont de manière avantageuse des formes d'emboîtement complémentaires, qui peuvent être sensiblement parallélépipédiques, chaque côté de la cavité comportant un orifice d'entrée ou un orifice de sortie d'un des circuits de fluide caloporteur chaud et froid et chaque côté de l'élément thermique comportant une entrée ou une sortie d'un de ses circuits collecteurs.

Dans la forme de réalisation préférée, un jeu, compris entre 0,05 mm et 15 mm et de préférence égal à 1 mm, est ménagé dans chaque côté entre la cavité et l'élément thermique formant une chambre de répartition du fluide caloporteur s'étendant sur l'épaisseur de l'élément thermique, un organe d'étanchéité étant disposé dans chaque angle de la cavité.

Ce générateur thermique comporte avantageusement un nombre paire d'éléments thermiques répartis sensiblement en cercle autour d'un axe central du support et les moyens magnétiques sont de préférence couplés à des moyens d'entraînement en rotation autour de cet axe central.

Ces moyens magnétiques peuvent comporter un nombre d'aimants correspondant au nombre d'éléments thermiques, ces aimants étant réunis par paire et disposés de part et d'autre des éléments thermiques pour soumettre au champ magnétique un élément thermique sur deux. Dans la forme de réalisation préférée, les éléments thermiques sont disposés entre eux de manière adjacente de sorte que les paires d'aimants passent d'une série d'éléments thermiques à l'autre sans rupture du champ magnétique.

Les moyens de récupération des calories et des frigories peuvent comporter des moyens de mise en circulation forcée du fluide caloporteur prévus sur un des circuits de fluide caloporteur ou sur les deux. Dans le premier cas, les deux circuits de fluide caloporteur chaud et froid sont reliés en une boucle fermée, le circuit de fluide caloporteur chaud reliant la sortie d'un échangeur thermique froid à l'entrée d'un échangeur thermique chaud et le circuit de fluide caloporteur froid reliant la sortie de l'échangeur thermique chaud à l'entrée de l'échangeur thermique froid. Dans le second cas, les deux circuits de fluide caloporteur chaud et froid sont indépendants et forment chacun une boucle fermée. De préférence, les fluides caloporteurs des deux circuits chaud et froid circulent en sens contraires.

Les moyens de commutation peuvent comporter au moins une vanne prévue sur chaque circuit de fluide caloporteur chaud et froid et agencée pour mettre en série l'un ou l'autre des circuits collecteurs des éléments thermiques selon qu'ils sont ou non soumis au champ magnétique et qu'ils produisent des calories ou des frigories.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 est une vue simplifiée en perspective du générateur thermique selon l'invention,
- la figure 2 est une vue éclatée du générateur de la figure 1,
- la figure 3 est une vue en perspective de la platine du générateur de la figure 1, sans les éléments thermiques,
- la figure 4 est une vue en perspective d'un élément thermique destiné à être monté dans la platine de la figure 3 et la figure 4A est une vue agrandie du détail A de la figure 4, et
- les figures 5A et 5B sont des schémas illustrant les circuits de fluide caloporteur selon les deux cycles de fonctionnement.

### Illustrations de l'invention et meilleure manière de la réaliser :

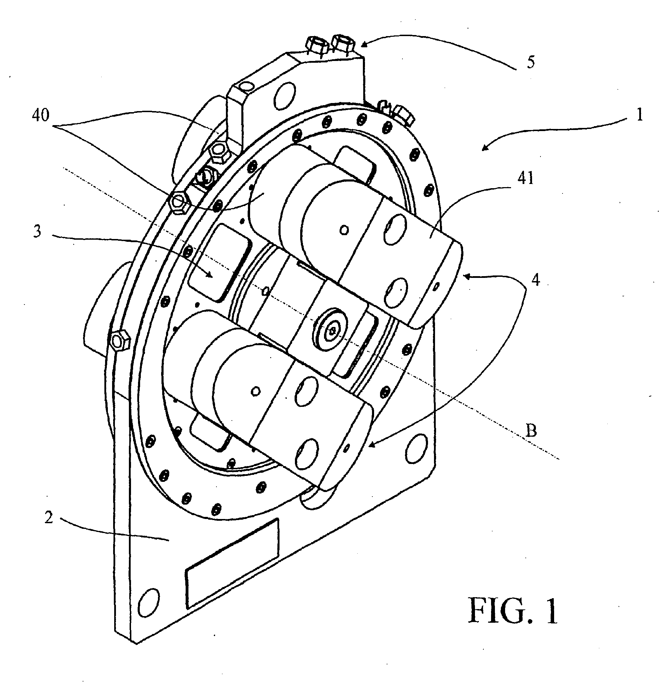

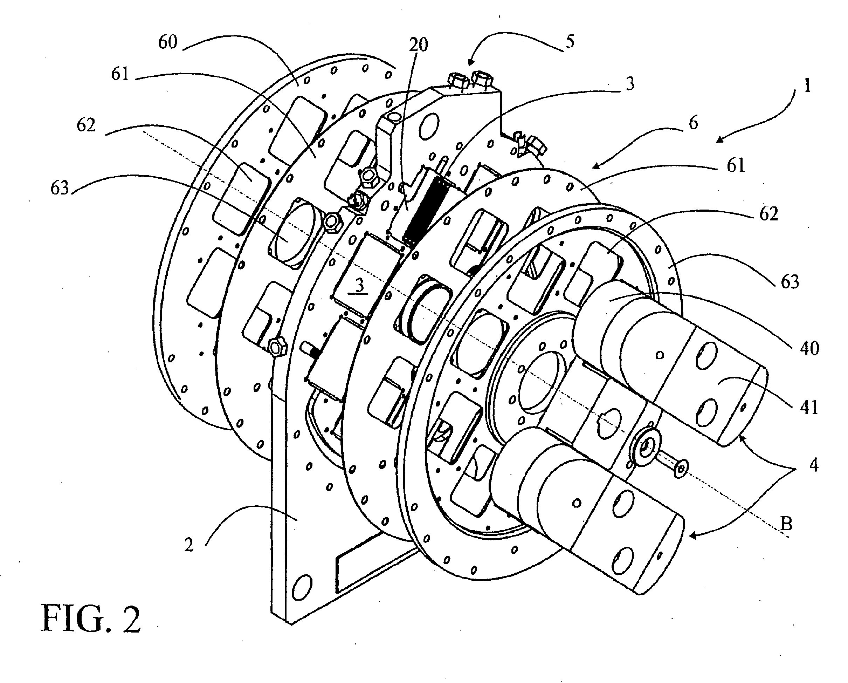

En référence aux figures 1 et 2, le générateur thermique 1 à matériau magnétocalorique selon l'invention comporte un support fixe se présentant sous la forme d'une platine 2 agencée pour porter au moins deux, et dans l'exemple illustré, huit éléments thermiques 3 à matériau magnétocalorique. Il comporte également des moyens magnétiques 4 mobiles par rapport aux éléments thermiques 3 de manière à les soumettre à une variation de champ magnétique pour faire varier leur température et des moyens de récupération 5 des calories et des frigories émises par les éléments thermiques 3. Ces moyens de récupération 5 comportent notamment deux circuits 51, 52 de fluide caloporteur distincts, c'est-à-dire étanches hydrauliquement l'un de l'autre, à savoir un circuit dit « chaud » 51 qui récupère les calories et un circuit dit « froid » 52 qui récupère les frigories, chaque circuit 51, 52 étant couplé à au moins un échangeur thermique apte à utiliser ces calories et frigories pour des applications, aussi bien industrielles que domestiques, de chauffage, de tempérage, de refroidissement, de climatisation ou similaire.

Dans l'exemple illustré, les éléments thermiques 3 sont logés dans des cavités 20 de la platine 2 et sont répartis sensiblement en cercle autour d'un axe central B. Les moyens magnétiques 4 comportent huit aimants permanents 40 répartis par paire, de part et d'autre de la platine 2, de manière à soumettre au champ magnétique un élément thermique 3 sur deux. Ces aimants permanents 40 sont portés par deux armatures 41 prévues de chaque côté de la platine 2 et entraînées en rotation par un arbre d'entraînement (non représenté) couplé à tout type d'actionneur, tel qu'un moteur, motoréducteur, moteur pas à pas, servomoteur, vérin rotatif, etc., directement ou par tout type de transmission mécanique adaptée.

L'avantage de ce mode de construction des éléments thermiques 3 en cercle autour d'un axe B permet d'utiliser un mode d'entraînement des moyens magnétiques 4, simple, par rotation continue dans le même sens. Bien entendu tout autre mode de construction peut convenir. Par exemple si les éléments thermiques 3 sont disposés en ligne, on choisira un mode d'entraînement des moyens magnétiques 4 par translation alternative.

Les aimants permanents peuvent être pleins, frittés ou feuilletés, associés à un ou plusieurs matériaux magnétisables concentrant et dirigeant leurs lignes de champ magnétique en direction des éléments thermiques 3. Tout autre type d'aimant peut convenir tel qu'un électroaimant ou un supraconducteur. Néanmoins, l'aimant permanent présente des avantages certains en terme de dimensionnement, de simplicité d'utilisation et de faible coût. On choisira de préférence des aimants permanents 40 capables de générer un champ magnétique d'au minimum 1 Tesla.

Par ailleurs, les éléments thermiques 3 sont disposés entre eux de manière adjacente de manière que les paires d'aimants 40 passent d'une série d'éléments thermiques 3 à l'autre sans rupture du flux magnétique. Cette disposition a l'avantage de limiter considérablement la force motrice nécessaire pour mettre en mouvement les moyens magnétiques 4 étant donné qu'elle n'a pas besoin de s'opposer à la force magnétique.

La platine 2 est constituée d'une plaque réalisée de préférence dans un matériau thermiquement isolant et non magnétique. Elle comporte des ouvertures formant les cavités 20 ayant des formes d'emboîtement complémentaires avec les éléments thermiques 3, ainsi qu'une épaisseur sensiblement égale pour que les éléments thermiques 3 affleurent les faces de la platine 2. D'autres formes de construction sont possibles, l'essentiel étant que chaque élément thermique 3 puisse être activé par le champ magnétique des aimants permanents 40.

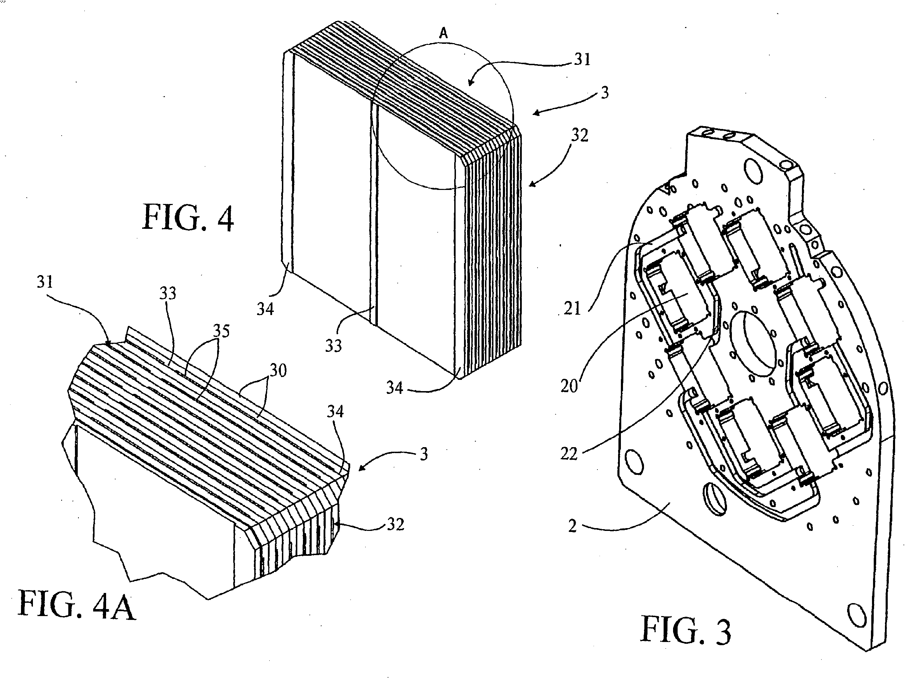

Plus particulièrement en référence à la figure 3, cette platine 2 comporte deux séries de canaux 21, 22 formant la partie intérieure des circuits de fluide caloporteur chaud 51 et froid 52. Les canaux 21, 22 de chaque série débouchent d'une part dans les cavités 20 par des orifices d'entrée et de sortie de fluide agencés pour communiquer avec les éléments thermiques 3, soit par cavité 20 deux orifices d'entrée et deux orifices de sortie, et d'autre part à l'extérieur de la platine 2 par des orifices d'entrée et de sortie agencés pour être raccordés à la partie extérieure des circuits de fluide caloporteur chaud 51 et froid 52 comportant notamment les échangeurs thermiques. Dans l'exemple représenté, ces canaux 21, 22 sont répartis sur les deux faces de la platine 20 et sont formés de rainures, par exemple réalisées par usinage, gravure, moulage ou toute autre technique appropriée. Dans cette réalisation, la platine 2 est associée à des moyens d'étanchéité 6 sous la forme de deux flasques 60, non métalliques, agencés pour s'appliquer chacun contre une face de la platine 2 par l'intermédiaire d'un joint 61 sous la forme d'une membrane permettant ainsi d'obturer et d'étancher les canaux 21, 22. Dans l'exemple représenté, les flasques 60 et les joints 61 comportent des découpes 62, 63 disposées en correspondance des éléments thermiques 3 et sont assemblés à la platine 2 par exemple par vissage ou tout autre moyen équivalent. Les flasques 60 et les joints 61 peuvent également être pleins. Bien entendu, les canaux 21, 22 peuvent être prévus sur une seule face de la platine 2. Cette platine 2 peut également être réalisée différemment, par exemple en deux pièces moulées et assemblées, les canaux 21, 22 étant logés à l'intérieur. De même, les joints 61 peuvent être remplacés par une couche de colle appropriée ou similaire.

Les éléments thermiques 3 sont au moins en partie et de préférence totalement réalisés dans une matière magnétocalorique, telle que par exemple du gadolinium (Gd), un alliage de gadolinium contenant par exemple du silicium (Si), du germanium (Ge), un alliage de manganèse contenant par exemple du fer (Fe), du magnésium (Mg), du phosphore (P) ou tout autre matériau ou alliage magnétisable équivalent. Le choix entre ces matériaux magnétocaloriques se fait en fonction des puissances caloriques et frigorifiques recherchées et des plages de température nécessaires. De manière générale, le matériau magnétocalorique peut se présenter sous la forme d'un bloc plein, d'un empilage de blocs pleins ou de plaques pleines, d'un assemblage de particules sous forme de poudre ou de particules, d'un bloc poreux, d'un empilage de blocs poreux ou de plaques poreuses, ou toute autre forme adaptée, ainsi qu'une combinaison de ces formes. De même, les éléments thermiques 3 peuvent être constitués d'un assemblage de différents matériaux magnétocaloriques. Ils peuvent aussi être réalisés dans une matière thermiquement conductrice comportant une ou plusieurs matières magnétocaloriques.

Ces éléments thermiques 3 ont la particularité de comporter chacun au moins deux circuits collecteurs 31, 32 distincts, c'est-à-dire étanches hydrauliquement l'un de l'autre, à savoir un circuit collecteur dit « chaud » 31 relié au circuit de fluide caloporteur chaud 21, 51 et un circuit collecteur dit « froid » relié au circuit de fluide caloporteur froid 22, 52, le fluide caloporteur de chacun des circuits étant mis en mouvement alternativement dans l'un ou l'autre circuit collecteur 31, 32 selon que l'élément thermique 3 est soumis ou non au champ magnétique et qu'il émet des calories ou des frigories.

Dans l'exemple représenté et détaillé aux figures 4 et 4A, les éléments thermiques 3 sont formés d'un empilage de plaques pleines 30 réalisées en gadolinium. Elles ont une forme carrée et comportent chacune trois nervures, une nervure centrale 33 et deux nervures d'extrémité 34, agencées pour délimiter entre-elles, lorsque les plaques 30 sont superposées, deux rainures étroites, parallèles, formant des passages de fluide 35. Les plaques 30 sont alternativement orientées dans des directions perpendiculaires pour former deux séries de passages de fluide 35 formant les deux circuits collecteurs 31, 32 distincts. Ainsi, ces circuits collecteurs 31, 32 sont formés d'une multitude de passages de fluide 35, répartis dans l'épaisseur des éléments thermiques 3 de manière à offrir une très grande surface d'échange thermique. Ces plaques 30 ayant une épaisseur de l'ordre du millimètre, les passages de fluide 35 sont de l'ordre du dixième de millimètre aptes à créer un écoulement dit laminaire du fluide caloporteur au travers des éléments thermiques 3 favorisant encore le rendement de cet échange thermique avec une quantité minimale de fluide caloporteur. Ces éléments thermiques 3 constituent ainsi des mini ou micro-échangeurs thermiques actifs générant et échangeant des calories et des frigories avec les fluides caloporteurs qui les traversent en fonction des alternances magnétisation/démagnétisation. Ces passages de fluide 35 peuvent également être orientés dans des directions parallèles.

Chaque circuit collecteur 31, 32 débouche sur deux côtés opposés des éléments thermiques 3 par une entrée et une sortie de fluide qui communiquent automatiquement avec les orifices d'entrée et de sortie de fluide caloporteur des circuits chaud 21 et froid 22 prévus en correspondance dans chaque cavité 20 lorsque les éléments thermiques 3 sont montés dans la platine 2. A cet effet, un jeu compris entre 0.05 mm et 15 mm et de préférence égal à 1 mm est ménagé entre les côtés correspondants de la platine 2 et de l'élément thermique 3 pour délimiter des chambres de répartition du fluide caloporteur s'étendant sur l'épaisseur de l'élément thermique 3. L'étanchéité des circuits collecteurs 31, 32 est assurée d'une part, entre les chambres de répartition, par des joints (non représentés) prévus par exemple aux quatre coins des cavités 20 et d'autre part, sur les faces recto-verso de la platine 2, par les flasques 60 et les joints 61.

Bien entendu, ces circuits collecteurs 31, 32 peuvent être réalisés différemment selon la forme du matériau magnétocalorique. Dans l'exemple illustré, les plaques 30 et leurs nervures 33, 34 peuvent être obtenues par usinage, laminoir, emboutissage, électroérosion, ou similaire. Dans une autre forme de réalisation, les plaques 30 peuvent être planes et on intercale entre elles une feuille intercalaire ou une entretoise délimitant les passages de fluide. Les passages de fluide 35 peuvent aussi être formés par des perforations, des rainures de formes différentes, des fentes, des interstices, une combinaison de ces formes, ces formes étant obtenues par usinage, gravures chimique, ionique ou mécanique, formage, espace entre les particules. Ces passages de fluide 35 peuvent avoir une taille comprise entre 0,01 mm et 5 mm et de préférence égale à 0,15 mm, cette faible dimension contribuant à créer un écoulement du fluide caloporteur dit laminaire.

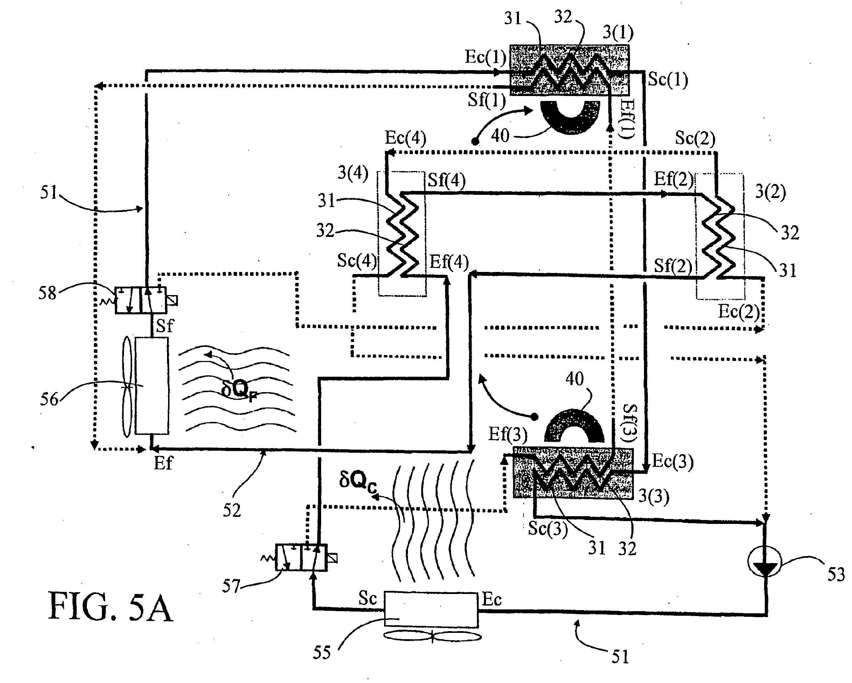

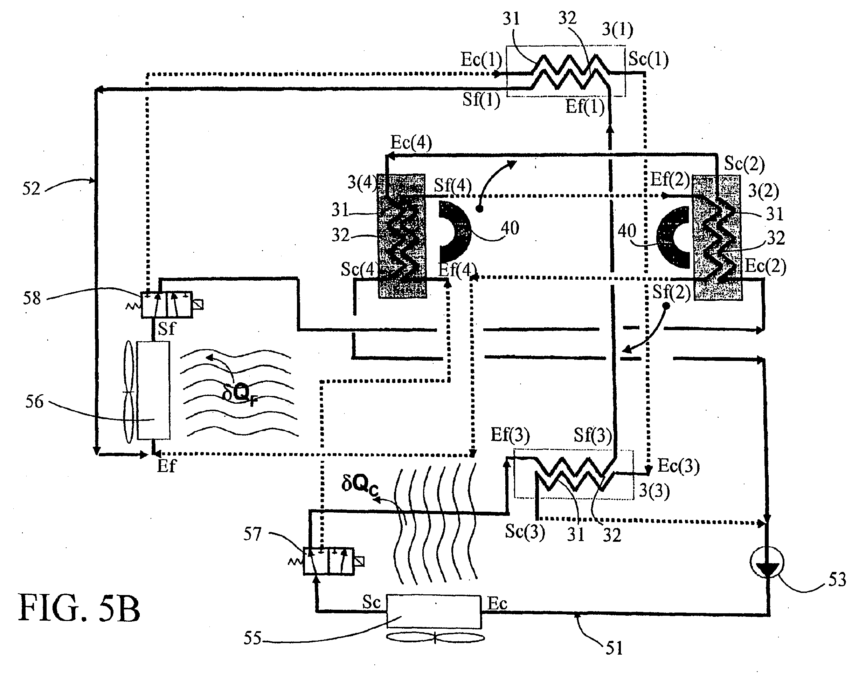

En référence à présent aux figures 5A et 5B, au moins un circuit 51, 52 de fluide caloporteur comporte des moyens de circulation forcée du fluide caloporteur, tels que par exemple une pompe 53, un thermosiphon ou tout autre moyen équivalent. Cette circulation peut également être libre et naturelle, simplement par le jeu des différences de température du fluide caloporteur.

La composition chimique du fluide caloporteur est adaptée à la plage de température voulue et choisie pour obtenir un échange thermique maximal. On utilisera par exemple de l'eau pure pour des températures positives et de l'eau additionnée d'antigel, par exemple un produit glycolé, pour des températures négatives. Ce générateur thermique 1 permet ainsi de s'affranchir de l'utilisation de tout fluide corrosif ou nocif pour l'homme et/ou son environnement.

Chaque circuit 51, 52 de fluide caloporteur comporte des moyens d'évacuation des calories et des frigories collectées respectivement pour chauffer et refroidir, tels que par exemple un échangeur thermique chaud 55 et un échangeur thermique froid 56, ou tout autre moyen équivalent. De même, chaque circuit 51, 52 comporte des moyens de commutation pour mettre, dans le circuit 51, 52 correspondant, les éléments thermiques 3 correspondants, tels que par exemple une électrovanne 57, 58 à deux voies, ou similaire. La commande de ces électrovannes 57, 58 est bien entendu synchronisée avec la rotation des aimants 40, comme expliqué plus loin. Ces moyens de commutation peuvent également être intégrés dans la platine 2, par usinage et/ou moulage et assemblage de composants, la commutation étant obtenue par l'attraction magnétique d'un piston, d'une bille, etc. mobile entre deux parties définissant des vannes.

Le fonctionnement du générateur thermique 1 selon l'invention est décrit en référence aux figures 5A et 5B qui illustrent schématiquement les deux cycles de fonctionnement du générateur thermique 1 avec, pour simplifier, quatre éléments thermiques 3 et deux paires d'aimants 40. Dans cet exemple, les moyens de récupération comportent une seule pompe 53 prévue sur le circuit chaud 51 et les deux circuits chaud 51 et froid 52 sont reliés en une boucle fermée : le circuit chaud 51 de fluide caloporteur reliant la sortie Sf de l'échangeur thermique froid 56 à l'entrée Ec de l'échangeur thermique chaud 55 et le circuit froid 52 reliant la sortie Sc de l'échangeur thermique chaud 55 à l'entrée Ef de l'échangeur thermique froid 56. On peut également prévoir deux circuits 51, 52 complètement indépendants formant chacun une boucle fermée. Dans ce cas, chaque circuit 51, 52 comporte sa propre pompe 53. Dans tous les cas, le sens de circulation du fluide caloporteur dans ces deux circuits 51, 52 est de préférence inversé. Pour simplifier, les circuits chaud et froid sont référencés 51, 52, sachant qu'une partie de ces circuits chaud et froid est intérieure au générateur thermique 1 et intégrée à la platine 2 sous les références 21, 22.

Dans le premier cycle de fonctionnement illustré par la figure 5A, les aimants 40 sont en regard de deux éléments thermiques 3(1), 3(3) qui s'échauffent sous l'effet du champ magnétique, les deux autres éléments thermiques 3(2), 3(4) se refroidissant car n'étant pas soumis au champ magnétique. Les électrovannes 57, 58 sont basculées dans une première position qui permet de mettre, en série dans le circuit chaud 51, les éléments thermiques 3(1), 3(3) qui s'échauffent, et en série dans le circuit froid 52, les éléments thermiques 3(2), 3(4) qui se refroidissent, les circuits dans lesquels le fluide caloporteur est en mouvement étant représentés en trait plein. La sortie Sf de l'échangeur thermique froid 56 est reliée, par l'électrovanne 58, à l'entrée Ec(1) de l'élément thermique 3(1), sa sortie Sc(1) est reliée à l'entrée Ec(3) de l'élément thermique 3(3) et sa sortie Sc(3) à l'entrée Ec de l'échangeur thermique chaud 51. Ce circuit chaud 51 met en mouvement le fluide caloporteur dans les circuits collecteurs chauds 31 des éléments thermiques 3(1), 3(3), les autres étant inactifs. De même, la sortie Sc de l'échangeur thermique chaud 55 est reliée, par l'électrovanne 57, à l'entrée Ef(4) de l'élément thermique 3(4), sa sortie Sf(4) est reliée à l'entrée Ef(2) de l'élément thermique 3(2) et sa sortie Sf(2) à l'entrée Ef de l'échangeur thermique froid 56. Le circuit froid 52 met en mouvement le fluide caloporteur dans les circuits collecteurs froids 32 des éléments thermiques 3(2), 3(4), les autres étant inactifs. Ce cycle est rapide et dure entre quelques millièmes de seconde et 20 secondes et de préférence 1 seconde correspondant au temps de passage des aimants 40 devant les éléments thermiques 3(1) et 3(3).

Lorsqu'ils les quittent pour venir devant les éléments thermiques 3(2) et 3(4), les électrovannes 57, 58 sont basculées dans une seconde position illustrée à la figure 5B correspondant au second cycle de fonctionnement dans lequel les aimants 40 sont en regard des deux autres éléments thermiques 3(2), 3(4) qui s'échauffent sous l'effet du champ magnétique, les deux premiers éléments thermiques 3(1), 3(3) se refroidissant car n'étant plus soumis au champ magnétique. Les électrovannes 57, 58 basculées dans leur seconde position mettent dans le circuit chaud 51, les éléments thermiques 3(2), 3(4) qui s'échauffent, et dans le circuit froid 52, les éléments thermiques 3(1), 3(3) qui se refroidissent, les circuits dans lesquels le fluide caloporteur est en mouvement étant représentés en trait plein. La sortie Sf de l'échangeur thermique froid 56 est reliée, par l'électrovanne 58, à l'entrée Ec(2) de l'élément thermique 3(2), sa sortie Sc(2) est reliée à l'entrée Ec(4) de l'élément thermique 3(4) et sa sortie Sc(4) à l'entrée Ec de l'échangeur thermique chaud 55. Le circuit chaud 51 met en mouvement le fluide caloporteur dans les circuits collecteurs chauds 31 des éléments thermiques 3(2), 3(4), les autres étant inactifs. De même, la sortie Sc de l'échangeur thermique chaud 55 est reliée, par l'électrovanne 57, à l'entrée Ef(3) de l'élément thermique 3(3), sa sortie Sf(3) est reliée à l'entrée Ef(1) de l'élément thermique 3(1) et sa sortie Sf(1) à l'entrée Ef de l'échangeur thermique froid 56. Le circuit froid 52 met en mouvement le fluide caloporteur dans les circuits collecteurs froids 32 des éléments thermiques 3(1), 3(3), les autres étant inactifs. Ce cycle rapide correspond au temps de passage des aimants 40 devant les éléments thermiques 3(2) et 3(4). Lorsqu'ils les quittent pour venir à nouveau devant les éléments thermiques 3(1) et 3(3), les électrovannes 57, 58 sont basculées dans leur première position illustrée à la figure 5A et le premier cycle de fonctionnement recommence.

Le fait d'utiliser comme fluide caloporteur un liquide et non un gaz permet de s'affranchir de clapet anti-retour. L'exemple est visible sur les figures 5A et 5B dans lesquelles, aux entrées Ec et Ef des échangeurs thermiques chaud 55 et froid 56, les doubles circuits chauds 51 et froids 52 se rejoignent respectivement. Le fluide caloporteur étant liquide n'est pas compressible et se dirige naturellement dans le circuit qui est fermé et non dans celui qui est ouvert.

Il apparaît clairement de cette description que les deux circuits chaud 51 et froid 52 sont actifs et dynamiques dans les deux cycles de fonctionnement, de même que les éléments thermiques 3 sont tous exploités. De plus, le fluide caloporteur chargé de récupérer les calories est limité à cette fonction, de même pour le fluide caloporteur chargé de récupérer les frigories. Etant donné qu'il n'y a aucun mélange de fluide caloporteur à des températures différentes, comme dans l'art antérieur, les deux circuits chaud 51 et froid 52 étant distincts, notamment au niveau des circuits collecteurs 31, 32 dans les éléments thermiques 3, il n'y a aucun échange ni mélange thermique entre circuits. Cette nouvelle technologie permet ainsi de réduire considérablement les pertes thermiques, d'accélérer les cycles de fonctionnement, d'accroître la puissance du générateur thermique 1 et d'atteindre de très bons rendements thermiques pour un besoin énergétique très réduit compte tenu de la faible puissance motrice nécessaire pour faire tourner les aimants 40.

De plus, cette technique de circuits chaud 21, 31, 51 et froid 22, 32, 52 distincts permet de mettre en pratique le cycle dit « AMR », c'est-à-dire qu'à chaque nouveau cycle de fonctionnement du générateur thermique 1, la différence de température, entre les températures en début et en fin de cycle, respectivement sur le circuit chaud 51 et sur le circuit froid 52, augmente, ce qui permet d'atteindre des niveaux de température de chauffage et de refroidissement supérieurs aux générateurs de ce type actuellement connus. Par ailleurs, le générateur thermique 1 de l'invention ne présente aucun danger, ni pour les personnes, ni pour l'environnement. En effet, s'il venait à manquer de fluide caloporteur dans les circuits chaud 51 et froid 52, il n'y aurait plus d'échange thermique donc aucun risque d'emballement thermique.

### Possibilités d'application industrielle :

Ce générateur thermique 1 trouve son application dans tout domaine technique où il est nécessaire de chauffer, tempérer, refroidir, climatiser, comme dans les appareils électroménagers pour les réfrigérateurs et les congélateurs, dans les climatisations et les chauffages aussi bien industriels que domestiques et même dans les véhicules, dans l'agroalimentaire pour les vitrines et les armoires réfrigérées, dans les caves à vin climatisées et dans tout type d'enceintes réfrigérées.

La présente invention n'est pas limitée à l'exemple de réalisation décrit mais s'étend à toute modification et variante évidentes pour un homme du métier tout en restant dans l'étendue de la protection définie dans les revendications annexées. Notamment, les formes illustrées, le nombre d'éléments thermiques 3 et d'aimants 40, la façon de créer les circuits collecteurs 31, 32 et d'intégrer les circuits chaud 21 et froid 22 dans la platine 2 peuvent différer.

## Revendications

1. Générateur thermique (1) à matériau magnétocalorique comportant au moins un support (2) fixe portant au moins deux éléments thermiques (3) à matériau magnétocalorique, des moyens magnétiques (4) mobiles par rapport aux dits éléments thermiques (3) de manière à les soumettre à une variation de champ magnétique pour faire varier leur température, et des moyens de récupération (5) des calories et des frigories émises par lesdits éléments thermiques (3) comportant au moins deux circuits (51, 52) distincts, dans chacun desquels circule un fluide caloporteur, un circuit dit « chaud » (51) et un circuit dit « froid » (52), chaque circuit (51, 52) étant couplé à au moins un échangeur thermique (55, 56) apte à évacuer les calories ou les frigories récupérées et à des moyens de commutation (57, 58) agencés pour mettre alternativement dans ledit circuit (51, 52) l'élément thermique (3) correspondant, **caractérisé en ce que** chaque élément thermique (3) comporte des passages de fluide (35) formant au moins deux circuits collecteurs (31, 32) distincts, un circuit collecteur dit « chaud » (31) dans lequel circule le fluide caloporteur du circuit chaud (51) chargé de collecter les calories émises par ledit élément thermique (3) soumis au champ magnétique, et un circuit collecteur dit « froid » (32) dans lequel circule le fluide caloporteur du circuit froid (52) chargé de collecter les frigories émises par ledit élément thermique (3) non soumis au champ magnétique, lesdits fluides caloporteurs étant mis en mouvement alternativement dans l'un ou l'autre circuit collecteur (31, 32) selon que ledit élément thermique (3) est soumis ou non au champ magnétique et qu'il émet des calories ou des frigories.

2. Générateur selon la revendication 1, **caractérisé en ce que** les éléments thermiques (3) sont au moins en partie réalisés dans une matière magnétocalorique se présentant au moins sous une forme choisie dans le groupe comprenant un bloc plein, un empilage de blocs pleins ou de plaques pleines (30), un assemblage de particules, un bloc poreux, un empilage de blocs poreux ou de plaques poreuses, une combinaison de ces formes.

3. Générateur selon la revendication 2, **caractérisé en ce que** lesdits circuits collecteurs (31, 32) sont formés chacun d'une multitude de passages de fluide (35), répartis dans l'épaisseur des éléments thermiques (3) pour offrir une grande surface d'échange thermique.

4. Générateur selon la revendication 3, **caractérisé en ce que** lesdits passages de fluide (35) sont de petite taille comprise entre 0.01 mm et 5 mm et de préférence égale à 0.15 mm apte à créer un écoulement dudit fluide caloporteur au travers desdits éléments thermiques (3), ledit écoulement étant sensiblement laminaire.

5. Générateur selon la revendication 3, **caractérisé en ce que** les passages de fluide (3 5) des deux circuits collecteurs (31, 32) de chaque élément thermique (3) ont des orientations différentes.

6. Générateur selon la revendication 3, **caractérisé en ce que** les passages de fluide (35) des deux circuits collecteurs (31, 32) de chaque élément thermique (3) ont des orientations sensiblement parallèles.

7. Générateur selon la revendication 3, **caractérisé en ce que** lesdits passages de fluide (35) sont définis au moins par une forme choisie dans le groupe comprenant des perforations, des rainures, des fentes, des interstices, une combinaison de ces formes, ces formes étant obtenues par usinage, gravures chimique, ionique ou mécanique, formage, intercalaire entre blocs ou plaques, espace entre particules.

8. Générateur selon la revendication 1, **caractérisé en ce que** ledit support fixe comporte au moins une platine (2) pourvue au moins de deux ouvertures délimitant des cavités (20) pour y recevoir lesdits éléments thermiques (3) et au moins deux séries de canaux (21, 22) formant une partie desdits circuits de fluide caloporteur chaud (51) et froid (52) et débouchant dans chaque cavité (20) par un orifice d'entrée et un orifice de sortie pour chaque circuit de fluide caloporteur (51, 52) aptes à communiquer avec les passages de fluide (35) correspondant desdits éléments thermiques (3), soit deux orifices d'entrée et deux orifices de sortie par cavité (20).

9. Générateur selon la revendication 8, **caractérisé en ce que** lesdits canaux (21, 22) sont formés par des rainures réparties sur au moins une des faces de ladite platine (20) et **en ce que** le générateur thermique (1) comporte au moins un flasque (60) rapporté sur ladite face de la platine (2) pour obturer et étancher lesdits canaux (21, 22).

10. Générateur selon la revendication 4, **caractérisé en ce que** lesdits éléments thermiques (3) et lesdites cavités (20) ont des formes d'emboîtement complémentaires.

11. Générateur selon la revendication 10, **caractérisé en ce que** ces formes d'emboîtement complémentaires sont sensiblement parallélépipédiques, **en ce que** chaque côté de la cavité (20) comporte un orifice d'entrée ou un orifice de sortie d'un desdits circuits de fluide caloporteur chaud (51) et froid (52) et **en ce que** chaque côté de l'élément thermique (3) comporte une entrée ou une sortie d'un de ses circuits collecteurs (31, 32).

12. Générateur selon la revendication 11, **caractérisé en ce qu'**un jeu compris entre 0,05 mm et 15 mm et de préférence égal à 1 mm est ménagé dans chaque côté entre la cavité (20) et l'élément thermique (3), ce jeu formant une chambre de répartition dudit fluide caloporteur s'étendant sur l'épaisseur dudit élément thermique (3) et **en ce qu'**un organe d'étanchéité est disposé dans chaque angle de la cavité (20).

13. Générateur selon la revendication 1, **caractérisé en ce qu'**il comporte un nombre paire d'éléments thermiques (3) répartis sensiblement en cercle autour d'un axe central (B) dudit support (2) et **en ce que** lesdits moyens magnétiques (4) sont couplés à des moyens d'entraînement en rotation autour de cet axe central (B).

14. Générateur selon la revendication 13, **caractérisé en ce que** les moyens magnétiques (4) comportent un nombre d'aimants (40) correspondant au nombre d'éléments thermiques (3), ces aimants (40) étant réunis par paire et disposés de part et d'autre desdits éléments thermiques (3) pour soumettre audit champ magnétique un élément thermique (3) sur deux.

15. Générateur selon la revendication 14, **caractérisé en ce que** les éléments thermiques (3) sont disposés entre eux de manière adjacente de sorte que les paires d'aimants (40) passent d'une série d'éléments thermiques (3) à l'autre sans rupture du champ magnétique.

16. Générateur selon la revendication 1, **caractérisé en ce que** les fluides caloporteurs des circuits chaud (51) et froid (52) circulent en sens contraires.

17. Générateur selon la revendication 1, **caractérisé en ce que** les moyens de récupération des calories et des frigories comportent des moyens de mise en circulation forcée (53) dudit fluide caloporteur prévus sur au moins un des circuits de fluide caloporteur (51, 52).

18. Générateur selon la revendication 17, **caractérisé en ce que** les circuits chaud (51) et froid (52) sont reliés en une boucle fermée, le circuit de fluide caloporteur chaud (51) reliant la sortie (Sf) d'un échangeur thermique froid (56) à l'entrée (Ec) d'un échangeur thermique chaud (55) et le circuit de fluide caloporteur froid (52) reliant la sortie (Sc) de l'échangeur thermique chaud (55) à l'entrée (Ef) de l'échangeur thermique froid (56).

19. Générateur selon la revendication 1, **caractérisé en ce que** les moyens de récupération des calories et des frigories comportent des moyens de mise en circulation forcée (53) dudit fluide caloporteur prévus sur chacun des circuits de fluide caloporteur (51, 52), ces circuits étant indépendants et formant chacun une boucle fermée.

20. Générateur selon la revendication 1, **caractérisé en ce que** les moyens de commutation comportent au moins une vanne (57, 58) prévue sur chaque circuit de fluide caloporteur chaud (51) et froid (52) et agencée pour mettre en série l'un ou l'autre des circuits collecteurs (31, 32) des éléments thermiques (3) selon qu'ils sont ou non soumis au champ magnétique et qu'ils émettent des calories ou des frigories.

## Claims

1. Thermal generator (1) based on magneto-calorific material comprising at least one fixed support (2) carrying at least two magneto-calorific thermal elements (3), magnetic means (4) which are mobile in relation to the said thermal elements (3) so as to subject them to a variation of magnetic field in order to make their temperature vary, and means (5) of recovering the calories and frigories emitted by the said thermal elements (3) comprising at least two separate circuits (51 and 52) in each of which flows a heat transfer fluid, a circuit (51) referred to as "hot" and a circuit (52) referred to as "cold", each circuit (51 and 52) being coupled to at least one heat exchanger (55 and 56) able to remove the calories or frigories recovered and fitted with means of switching (57 and 58) to put the corresponding thermal element (3) into the said circuit (51 and 52), **characterised in that** each thermal element (3) has passages for fluid (35) forming at least two distinct collector circuits (31 and 32), a "hot" collector circuit (31) in which flows the heat transfer fluid of the hot circuit (51) whose function is to collect the calories emitted by the said thermal element (3) subjected to the magnetic field, and a "cold" collector circuit (32) in which flows the heat transfer fluid of the cold circuit (52) whose function is to collect the frigories emitted by the said thermal element (3) not subjected to the magnetic field, the said heat transfer fluids being made to move alternately in one collector circuit or the other (31 and 32) depending on whether or not the said thermal element (3) is subjected to the magnetic field and emits calories or frigories.

2. Generator according to Claim 1, **characterised in that** the thermal elements (3) are at least partly made from a magneto-calorific material taking at least one form chosen from a group comprising a solid block, a stack of solid blocks or solid plates (30), an assembly of particles, a porous block, a stack of porous blocks or of porous plates or a combination of these forms.

3. Generator according to Claim 2, **characterised in that** the collector circuits (31 and 32) are preferably each formed from many passages for fluid (35), distributed in the thickness of the thermal elements (3) in order to offer a large heat exchange area.

4. Generator according to Claim 3, **characterised in that** the passages for fluid (35) are of small size, ranging between 0.01 mm and 5 mm and preferably equal to 0.15 mm, suitable for creating a flow of the heat transfer fluid through the thermal elements (3), the said flow being predominantly laminar.

5. Generator according to Claim 3, **characterised in that** the passages for fluid (35) in the two collector circuits (31 and 32) of each thermal element (3) have different orientations.

6. Generator according to Claim 3, **characterised in that** the passages for fluid (35) in the two collector circuits (31 and 32) of each thermal element (3) have approximately parallel orientations.

7. Generator according to Claim 3, **characterised in that** the passages for fluid (35) are defined at least by one form chosen from the group comprising perforations, grooves, slots, interstices, a combination of these forms, these forms being obtained by machining, chemical, ionic or mechanical etching, forming, separator between blocks or plates, space between particles.

8. Generator according to Claim 1, **characterised in that** the fixed support comprises at least one plate (2) possessing at least two openings delimiting cavities (20) to receive the said thermal elements (3) and at least two series of channels (21 and 22) forming a part of the hot and cold heat transfer fluid circuits (51 and 52) reaching each cavity (20) by an inlet orifice and an outlet orifice for each circuit (51 and 52) suitable for communicating with the corresponding fluid passages (35) of the said thermal elements (3), i.e. two inlet orifices and two outlet orifices per cavity (20).

9. Generator according to Claim 8, **characterised in that** the said channels (21 and 22) are formed by grooves distributed over one of the faces of the said plate (2) and **in that** the thermal generator (1) comprises at least one flange (60) added to the said face of the plate (2) in such a manner as to cover and seal the said channels (21 and 22).

10. Generator according to Claim 4, **characterised in that** the said thermal elements (3) and said cavities (20) have complementary assembly shapes.

11. Generator according to Claim 10, **characterised in that** the complementary assembly shapes are approximately parallelepipedic, **in that** each side of the cavity (20) includes an inlet orifice or an outlet orifice of one of the said hot and cold heat transfer fluid circuits (51 and 52) and each side of the thermal element (3) including an inlet and an outlet of one of its collector circuits (31 and 32).

12. Generator according to Claim 11, **characterised in that** a gap of between 0.05 mm and 15 mm, and preferably equal to 1 mm, is arranged in each side between the cavity (20) and the thermal element (3), this gap forming a heat transfer fluid distribution chamber extending over the thickness of the thermal element (3) and **in that** a sealing device is placed in each corner of the cavity (20).

13. Generator according to Claim 1, **characterised in that** it has an even number of thermal elements (3) arranged approximately in a circle around a central axis (B) of the said support (2) and the said magnetic means (4) are coupled to means of rotational driving around this central axis (B).

14. Generator according to Claim 13, **characterised in that t**he magnetic means (4) comprise a number of magnets (40) corresponding to the number of thermal elements (3), these magnets (40) being joined in pairs and arranged on either side of the said thermal elements (3) in order to subject on alternate thermal element (3) to the magnetic field.

15. Generator according to Claim 14, **characterised in that** the thermal elements (3) are arranged adjacently to each other so that the pairs of magnets (40) pass from one series of thermal elements (3) to another without interruption of the magnetic field.

16. Generator according to Claim 1, **characterised in that** the heat transfer fluids in the hot and cold circuits (51 and 52) flow in opposite directions.

17. Generator according to Claim 1, **characterised in that** the means of recovering the calories and frigories include means (53) of forcing the said heat transfer fluid to flow in at least one of the heat transfer fluid circuits (51 and 52).

18. Generator according to Claim 17, **characterised in that** the hot and cold heat transfer fluid circuits (51 and 52) are connected in a closed loop, the hot heat transfer fluid circuit (51) connecting the outlet (Sf) of a cold heat exchanger (56) to the inlet (Ec) of a hot heat exchanger (55) and the cold heat transfer fluid circuit (52) connecting the outlet (Sc) of the hot heat exchanger (55) to the inlet (Ef) of the cold heat exchanger (56).

19. Generator according to Claim 1, **characterised in that** the means of recovering calories and frigories comprise means (53) of forcing the circulation of the heat transfer fluid in one or both of the heat transfer fluid circuits (51 and 52), these circuits being independent and each forming a closed loop.

20. Generator according to Claim 1, **characterised in that** the means of switching comprise at least one valve (57 and 58) in each hot and cold heat transfer fluid circuit (51 and 52), arranged to place in series one or the other of the collector circuits (31 and 32) of the thermal elements (3) depending on whether or not they are subjected to the magnetic field and produce calories or frigories.

## Patentansprüche

1. Thermogenerator (1) aus magnetokalorischem Werkstoff, der mindestens einen feststehenden Träger (2), der mindestens zwei Thermoelemente (3) aus magnetokalorischem Werkstoff trägt, Magneteinrichtungen (4), die im Verhältnis zu den Thermoelementen (3) so beweglich sind, dass diese einer Magnetfeldschwankung unterzogen werden, um ihre Temperatur zu verändern, und Rückgewinnungseinrichtungen (5) für von den Thermoelementen (3) abgegebene Wärme- und Kälteeinheiten aufweist, die mindestens zwei getrennte Kreisläufe (51,52) aufweisen, wobei in jedem davon ein Wärmeübertragungsfluid zirkuliert, einen sogenannten "warmen" (51) Kreislauf und einen sogenannten "kalten" (52) Kreislauf, wobei jeder Kreislauf (51,52) mit mindestens einem Wärmetauscher (55,56), der in der Lage ist, die zurückgewonnenen Wärme- oder Kälteeinheiten abzuscheiden, und mit Schalteinrichtungen (57,58) gekoppelt ist, die angeordnet sind, um das entsprechende Thermoelement (3) wechselweise in dem entsprechenden Kreislauf (51,52) zu positionieren, **dadurch gekennzeichnet, dass** jedes Thermoelement (3) Flüssigkeitsdurchgänge (35), die mindestens zwei getrennte Sammelkreisläufe (31,32) ausbilden, einen sogenannten "warmen" (31) Sammelkreislauf, in dem das Wärmeübertragungsfluid von dem warmen Kreislauf (51) zirkuliert, der die von dem Thermoelement (3) abgegebenen Wärmeeinheiten sammeln soll, welches dem Magnetfeld ausgesetzt ist, und einen sogenannten "kalten" (32) Sammelkreislauf aufweist, in dem das Wärmeübertragungsfluid von dem kalten Kreislauf (52) zirkuliert, der die von dem Thermoelement (3) abgegebenen Kälteeinheiten sammeln soll, wobei die Wärmeübertragungsfluide wechselweise in dem einen oder anderen Sammelkreislauf (31,32) in Bewegung versetzt werden, je nachdem ob das Thermoelement (3) dem Magnetfeld ausgesetzt ist oder nicht und ob es Wärme- oder Kälteeinheiten abgibt.

2. Generator nach Anspruch 1, **dadurch gekennzeichnet, dass** die Thermoelemente (3) mindestens teilweise aus einem magnetokalorischen Werkstoff hergestellt sind, wobei sie mindestens in einer Form vorhanden sind, die aus der Gruppe ausgewählt ist, die einen massiven Block, einen Stapel aus massiven Blöcken oder aus massiven Platten (30), einen Teilchenverbund, einen feinporigen Block, einen Stapel aus feinporigen Blöcken oder aus feinporigen Platten, eine Kombination dieser Formen umfasst.

3. Generator nach Anspruch 2, **dadurch gekennzeichnet, dass** die Sammelkreisläufe (31,32) jeweils aus einer Mehrzahl von über die Dicke der Thermoelemente (3) verteilten Flüssigkeitsdurchgängen (35) ausgebildet sind, um eine große Wärmeaustauschfläche zu bieten.

4. Generator nach Anspruch 3, **dadurch gekennzeichnet, dass** die Flüssigkeitsdurchgänge (35) eine geringe Größe aufweisen, die zwischen 0,01 mm und 5 mm liegt und vorzugsweise 0,15 mm entspricht, die in der Lage ist, eine Fließbewegung des Wärmeübertragungsfluids über die Thermoelemente (3) zu erzeugen, wobei die Fließbewegung praktisch laminar ist.

5. Generator nach Anspruch 3, **dadurch gekennzeichnet, dass** die Flüssigkeitsdurchgänge (35) der zwei Sammelkreisläufe (31,32) von jedem Thermoelement (3) unterschiedliche Ausrichtungen aufweisen.

6. Generator nach Anspruch 3, **dadurch gekennzeichnet, dass** die Flüssigkeitsdurchgänge (35) der zwei Sammelkreisläufe (31,32) von jedem Thermoelement (3) praktisch parallele Ausrichtungen aufweisen.

7. Generator nach Anspruch 3, **dadurch gekennzeichnet, dass** die Flüssigkeitsdurchgänge (35) mindestens durch eine Form festgelegt sind, die aus der Gruppe ausgewählt ist, die Bohrungen, Nuten, Schlitze, Zwischenräume, eine Kombination dieser Formen umfasst, wobei diese Formen durch Bearbeitung, chemische, ionische oder mechanische Ätzung bzw. Bearbeitung, Formung, Zwischenschicht zwischen Blöcken oder Platten, einen Raum oder Teilchenzwischenraum erhalten werden.

8. Generator nach Anspruch 1, **dadurch gekennzeichnet, dass** der feststehende Träger mindestens eine Platte (2), die mit mindestens zwei Öffnungen versehen ist, welche die Hohlräume (20) begrenzen, um dort die Thermoelemente (3) aufzunehmen, und mindestens zwei Reihen von Kanälen (21,22) aufweist, die einen Teil der Kreisläufe von warmem (51) und kaltem (52) Wärmeübertragungsfluid ausbilden und in jeden Hohlraum (20) über eine Eintritts- und eine Austrittsöffnung für jeden Kreislauf (51,52) von Wärmeübertragungsfluid münden, die in der Lage sind, mit den entsprechenden Flüssigkeitsdurchgängen (35) der Thermoelemente (3), d. h. die zwei Eintrittsöffnungen und zwei Austrittsöffnungen pro Hohlraum (20), in Verbindung zu gehen.

9. Generator nach Anspruch 8, **dadurch gekennzeichnet, dass** die Kanäle (21,22) durch Nuten ausgebildet sind, die über mindestens eine der Seiten der Platte (20) verteilt sind, und dass der Thermogenerator (1) mindestens einen Flansch (60) aufweist, der auf der Seite der Platte (2) aufgesetzt ist, um die Kanäle (21,22) abzudecken und abzudichten.

10. Generator nach Anspruch 4, **dadurch gekennzeichnet, dass** die Thermoelemente (3) und die Hohlräume (20) komplementäre Einpassungsformen aufweisen.

11. Generator nach Anspruch 10, **dadurch gekennzeichnet, dass** die komplementären Einpassungsformen praktisch parallelepiped sind, indem jede Seite des Hohlraumes (20) eine Eintrittsöffnung oder Austrittsöffnung eines der warmen (51) und kalten (52) Kreisläufe des Wärmeübertragungsfluids aufweist, und wobei jede Seite des Thermoelementes (3) einen Eingang oder Ausgang eines seiner Sammelkreisläufe (31,32) aufweist.

12. Generator nach Anspruch 11, **dadurch gekennzeichnet, dass** ein Spiel zwischen einschließlich 0,05 mm und 15 mm und vorzugsweise gleich 1 mm in jede Seite zwischen dem Hohlraum (20) und dem Thermoelement (3) eingearbeitet ist, wobei das Spiel eine Aufteilungskammer für das Wärmeübertragungsfluid ausbildet, die sich über die Dicke des Thermoelementes (3) erstreckt, und wobei ein Dichtungselement (3) in jeder Ecke des Hohlraumes (20) angeordnet ist.

13. Generator nach Anspruch 1, **dadurch gekennzeichnet, dass** er eine gerade Anzahl von Paaren von Thermoelementen (3) aufweist, die praktisch kreisförmig um eine Mittelachse (B) des Trägers (2) verteilt sind, wobei die Magneteinrichtungen (4) mit Drehantriebseinrichtungen um die Mittelachse (B) verbunden sind.

14. Generator nach Anspruch 13, **dadurch gekennzeichnet, dass** die Magneteinrichtungen (4) eine Anzahl von Magneten (40) aufweisen, die der Anzahl von Thermoelementen (3) entspricht, wobei die Magnete (40) paarweise verbunden und beiderseits der Thermoelemente (3) angeordnet sind, um ein Thermoelement (3) von zwei dem Magnetfeld auszusetzen.

15. Generator nach Anspruch 14, **dadurch gekennzeichnet, dass** die Thermoelemente (3) aneinander angrenzend so angeordnet sind, dass die Paare von Magneten (40) von einer Reihe von Thermoelementen (3) zur anderen ohne Unterbrechung des Magnetfeldes übergehen.

16. Generator nach Anspruch 1, **dadurch gekennzeichnet, dass** die Wärmeübertragungsfluids der warmen (51) und kalten (52) Kreisläufe in einander entgegengesetzten Richtungen zirkulieren.

17. Generator nach Anspruch 1, **dadurch gekennzeichnet, dass** die Einrichtungen zur Rückgewinnung der Wärme- und Kälteeinheiten Einrichtungen (53) umfassen, um das Wärmeübertragungsfluid in eine zwangsweise Zirkulation zu bringen, die in mindestens einem der Kreisläufe (51,52) des Wärmeübertragungsfluids vorgesehen sind.

18. Generator nach Anspruch 17, **dadurch gekennzeichnet, dass** die warmen (51) und kalten (52) Kreisläufe in einer Endlosschleife miteinander verbunden sind, wobei der warme (51) Kreislauf von Wärmeübertragungsfluid den Ausgang (Sf) eines kalten Wärmetauschers (56) mit dem Eingang (Ec) eines warmen Wärmetauschers (55) verbindet, und wobei der Kreislauf des kalten Wärmeübertragungsfluids (52) den Ausgang (Sc) des warmen Wärmetauschers (55) mit dem Eingang (Ef) des kalten Wärmetauschers (56) verbindet.

19. Generator nach Anspruch 1, **dadurch gekennzeichnet, dass** die Einrichtungen zur Rückgewinnung der Wärme- und Kälteeinheiten Einrichtungen (53) umfassen, um das Wärmeübertragungsfluid in eine zwangsweise Zirkulation zu bringen, die in jedem der Kreisläufe (51,52) des Wärmeübertragungsfluids vorgesehen sind, wobei die Kreisläufe voneinander unabhängig sind und jeweils eine Endlosschleife ausbilden.

20. Generator nach Anspruch 1, **dadurch gekennzeichnet, dass** die Schalteinrichtungen mindestens ein Ventil (57,58) umfassen, welches in jedem Kreislauf von warmem (51) und kaltem (52) Wärmeübertragungsfluid vorgesehen und angeordnet ist, um den einen oder den anderen der Sammelkreisläufe (31,32) der Thermoelemente (3) in Abhängigkeit davon in Reihe zu schalten, ob sie einem Magnetfeld ausgesetzt sind oder nicht und ob sie Wärme- oder Kälteeinheiten abgeben.
